# EUROPEAN PATENT APPLICATION

(11) **EP 2 320 633 A2**
(43) Date of publication of application: **11.05.2011**
(21) Application number: 10190256.7
(22) Date of filing: 05.11.2010
(51) Int. Cl.: H04N 1/21

(54) **Method of managing file in image forming apparatus and image forming apparatus of performing the same**

(30) Priority: 06.11.2009 KR 20090107172
(71) Applicant: Samsung Electronics Co., Ltd, Suwon-si, Gyeonggi-do (KR)
(72) Inventor: Jo, Byeong-tak, Gyeonggi-do (KR); Kim, Byoung-yue, Gyeonggi-do (KR); Kim, Bo-yeon, Gyeonggi-do (KR)
(74) Representative: Bruce, Alexander Richard Henry

(57) **Abstract**

A method of managing a file of an image forming apparatus, and an image forming apparatus to perform the method. The method and image forming apparatus includes logging in the image forming apparatus, checking user authentication information corresponding to the logging in the image forming apparatus, displaying a list of document boxes corresponding to the checked authentication information, determining whether a user recycle bin corresponding to the checked authentication information exists in the image forming apparatus, generating a user recycle bin corresponding to the checked authentication information if a pre-generated user recycle bin does not exist, and displaying the generated user recycle bin.

## Description

The present invention relates to a method of managing files of an image forming apparatus and an image forming apparatus to perform the method.

Image forming apparatuses that perform at least one of the functions including printing, copying, scanning, faxing and e-mailing a document, and sending a document to servers may use a document box for performing the various functions. Users may store data created during printing, faxing, scanning, and copying by using the document box. The document box may also assist in conveniently managing a large amount of data stored in the image forming apparatuses, which may be used by a plurality of users. Accordingly, the users may use the document box to perform tasks including printing, e-mailing and faxing a document and/or sending a document to servers to store the data in the image forming apparatuses at a user's desired time.

The present invention provides a method of managing files of an image forming apparatus having a reinforced security function.

The present invention also provides an image forming apparatus to perform the method.

Additional features and utilities of the present invention will be set forth in part in the description which follows and, in part, will be obvious from the description, or may be learned by practice of the present invention.

According to an aspect of the present invention, there is provided a method of managing at least one file stored in a document box in an image forming apparatus including a display unit and a document box corresponding to at least one user, the method including logging in the image forming apparatus using user authentication information, checking the user authentication information used during the logging in the image forming apparatus, displaying a list of the document box of the image forming apparatus and corresponding to the checked authentication information, on the display unit, determining whether a pre-generated user recycle bin exists in the image forming apparatus that corresponds to the checked authentication information exists in the image forming apparatus, generating a user recycle bin corresponding to the checked authentication information in response to determining the pre-generated user recycle bin does not exist, and displaying the generated user recycle bin on the display unit, wherein the user recycle bin is generated with respect to the at least one user.

According to another aspect of the present invention, there is provided an image forming apparatus comprising a document box corresponding to at least one user, including an input unit to receive login information from the user, an authentication information checking unit to check user authentication information corresponding to the received login information, an authentication information determining unit to determine whether a pre-generated user recycle bin corresponding to the checked authentication information exists, a recycle bin generating unit to generate a user recycle bin corresponding to the checked authentication information when the pre-generated user recycle bin does not exist, a storage unit to store the document box and the generated user recycle bin, a display unit to display at least one of a list of a document box corresponding to the checked authentication information and the generated user recycle bin, and a control unit to control the generated user recycle bin displayed on the display unit, wherein the recycle bin generating unit generates a user recycle bin corresponding to the at least one user, and the storage unit stores the generated recycle bin corresponding to the at least one user.

The above and other features and advantages of the present invention will become more apparent by describing in detail exemplary embodiments thereof with reference to the attached drawings in which:
FIG. 1 is a block diagram illustrating an image forming system according to an embodiment of the present invention;
FIG. 2 is a diagram of a document box and a user recycle bin of FIG. 1;
FIG. 3 illustrates a graphic user interface (GUI) displayed on an image forming apparatus according to an embodiment of the present invention;
FIG. 4 illustrates a GUI displayed on an image forming apparatus according to another embodiment of the present invention;
FIG. 5 is a flowchart illustrating a method of managing a file in an image forming apparatus according to an embodiment of the present invention;
FIGS. 6A-6C are flowcharts illustrating additional exemplary methods of managing a file in an image forming apparatus according to exemplary embodiments of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

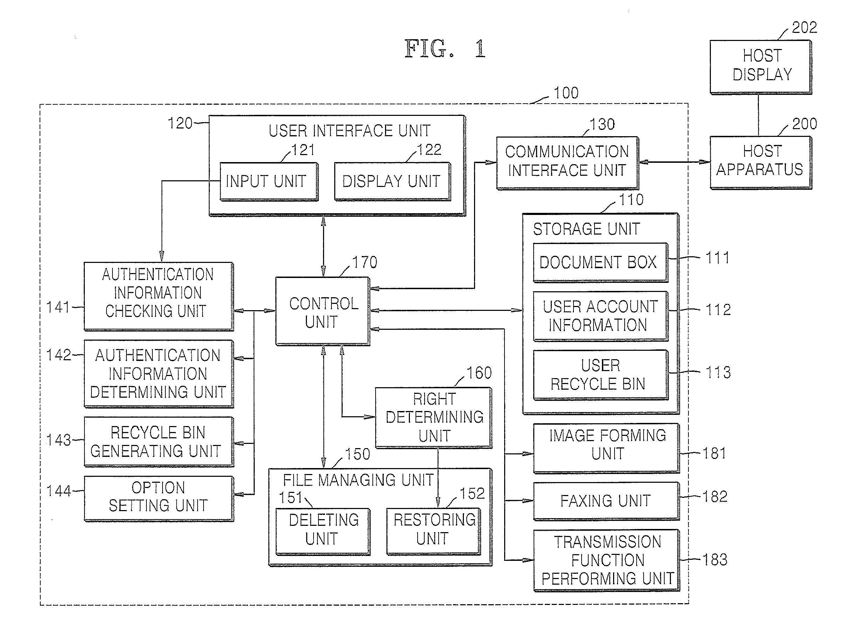

FIG. 1 is a block diagram illustrating an image forming system according to an embodiment of the present invention. Referring to FIG. 1, the image forming system includes an image forming apparatus 100 and a host apparatus 200 in electrical communication with the image forming apparatus 100. That is, the host apparatus 200 may communicate with the image forming apparatus via wired connection, wireless communication, and/or any other form of communication technology to communicate data between the image forming apparatus 100 and the host apparatus 200. In FIG. 1, only one host apparatus 200 is connected to the image forming apparatus 100; however, a plurality of host apparatuses 200 may be connected to the image forming apparatus 100. Alternatively, a plurality of image forming apparatus 100 may be connected to the host apparatus 200. The host apparatus 200 may also include a host display 202 to display information to a user. This information may include data received from image forming apparatus 100 and data processed in the host apparatus 200.

The image forming apparatus 100 and the host apparatus 200 may transmit and/or receive data via a wired or wireless network or a wired serial communication. The network may be Internet, a local area network (LAN), a wireless LAN, a wide area network (WAN), a personal area network (PAN), or any other type of network that can transmit and receive data.

Elements of the image forming apparatus 100 and the host apparatus 200 illustrated in FIG. 1 are related to an exemplary embodiment of the present invention. Thus, other general-use elements than the elements illustrated in FIG. 1 may also be included, which is obvious to one of ordinary skill in the art.

Referring to FIG. 1, the image forming apparatus 100 includes a storage unit 110, a user interface unit 120, a communication interface unit 130, an authentication information checking unit 141, an authentication information determining unit 142, a recycle bin generating unit 143, an option setup unit 144, a file managing unit 150, a right determining unit 160, a control unit 170, an image forming unit 181, a faxing unit 182, and a transmission function performing unit 183. Also, the storage unit 110 includes a document box 111, a user account information area 112, and a user recycle bin 113. The user interface unit 120 includes an input unit 121 and a display unit 122.

The image forming apparatus 100 may store files to be printed, scanned, copied, faxed, e-mailed, sent to servers, or the like. The files may be stored in the storage unit 110 of the image forming apparatus 100. According to an exemplary embodiment, the file includes at least one file selected from a group including scan data, fax data, e-mail data, and printing data to perform printing, scanning, copying, faxing, e-mailing a document, and/or sending a document to servers.

Scan data may be generated as a result of a scanning operation of the image forming apparatus 100, fax data may be generated as a result of a faxing of the image forming apparatus 100, and e-mail data may be generated as a result of e-mailing a document. Also, printing data may be received from the host apparatus 200 that is connected to the image forming apparatus 100.

The storage unit 110 stores the document box 111 corresponding to at least one user, the user account information 112 with respect to the at least one user, and the user recycle bin 113 corresponding to the at least one user.

The document box 111 stores files that are to be stored in the image forming apparatus 100 according to properties. More specifically, the control unit 170 stores the files in a plurality of document boxes 111 that are classified according to properties of the files. The properties include a writer, a date of creation of the file, a place the file is generated, a file type, and security information set to the file. The document boxes classified according to the properties may include, but are not limited to, a common box that is commonly used by a plurality of users of the image forming apparatus 100, a secure box that is commonly used by a plurality of users and to which security is set, and user boxes corresponding to a plurality of users.

The user account information 112 stores authentication information with respect to the plurality of users who use the image forming apparatus 100. User authentication information is information to identify each of the users, and is, for example, a login identification (ID)/password of a user, an ID/password of the host apparatus 200 connected to the image forming apparatus 100, etc.

The storage unit 110 stores the document box 111 and the user account information 112. Accordingly, the storage unit 110 may store a plurality of document boxes 111 corresponding to a plurality of users of the image forming apparatus 100 with reference to the user account information 112 of the plurality of users.

For example, printing data transmitted from the host device 200 to the image forming apparatus 100 may be stored in one of the document boxes 111 corresponding to the users of the host apparatus 200.

Alternatively, scan data generated by the image forming apparatus 100 may be stored in one document box 111 corresponding to authentication information obtained from the user, or in a document box 111 that is commonly used by the plurality of users if authentication information is not input by the user.

The user recycle bin 113 is where files deleted by the user of the image forming apparatus 100 may be temporarily stored. For example, the user recycle bin 113 includes a storage space provided by a recycle bin function in the Microsoft Window operation system or a trash function in the Mac operation system by Apple or in Linux.

A plurality of the user recycle bins 113 according to the current embodiment are included to correspond to a plurality of users that use the image forming apparatus 100. Accordingly, among the plurality of user recycle bins 113, the user recycle bins 113 corresponding to user authentication information obtained from the user of the image forming apparatus 100 may be provided to the user.

For example, when the user of the image forming apparatus 100 inputs user authentication information via the host apparatus 200, the image forming apparatus 100 provides only the user recycle bin 113 corresponding to the authentication information, to the host apparatus 200, and the user may search for the user recycle bin 113 corresponding to the authentication information.

Accordingly, the files deleted from the image forming apparatus 100 are not physically completely deleted but may be temporarily stored in the user recycle bin 113. Thus, files deleted by mistake may be restored. Also, when restoring the deleted files, since only files stored in the user recycle bin 113 corresponding to user authentication information may be restored, the security function of the image forming apparatus 100 may be improved by preventing file restoring by an unauthorized person.

Examples of the storage unit 110 according to an exemplary embodiment include, but are not limited to, a read only memory (ROM), a random access memory (RAM), a flash memory, a magnetic computer memory device such as a hard disk, and an optical disk drive.

The user interface unit 120 obtains input information from the user and provides output information to the user. The user interface unit 120 includes an input unit 121 and a display unit 122.

The input unit 121 receives login information, i.e., user authentication information, directly from the user, and the display unit 122 displays at least one of a list of the document boxes 111 corresponding to the authentication information and the user recycle bin 113 corresponding to the authentication information. The user recycle bin 113 may be displayed by an icon in the form of a bin as in the Microsoft Window operation system or by characters such as "Bin" or "User recycle bin" but is not limited thereto, which is obvious to one of ordinary skill in the art.

Also, the input unit 121 receives from the user a selection signal that selects one of the document boxes 111 among the list of the document box 111 displayed on the display unit 122. In response to the selection signal, the display unit 122 displays a file list with respect to at least one file stored in the document box 111 (hereinafter referred to as a file list of the document box 111) corresponding to the selection signal.

The input unit 121 may receive a signal that selects at least one file to be deleted from among the files listed in the file list of the document box 111 displayed on the display unit 122. Also, the user may select the file to be deleted among the file list by dragging and dropping the selected file to be deleted on the icon denoting the user recycle bin 113.

The selected file to be deleted is deleted by the file managing unit 150 in the document box 111, and may be stored in the recycle bin unit 113. The file managing unit 150 will be described in detail below.

Also, the user may select the user recycle bin 113 by, for example, touching the user recycle bin 113 displayed on the display panel. That is, the input unit 121 may receive a selection signal that selects the use recycle bin 113 displayed on the display unit 122, and the display unit 122 displays a file list regarding at least one file stored in the user recycle bin 113 (hereinafter referred to as a file list of the user recycle bin 113). The file list of the user recycle bin 113 may further display information of the files by using a thumbnail function and/or may be aligned according to usage setup and/or the order of deleting date, or another organization method.

The input unit 121 receives a signal that selects a file to be restored, among the file list of the user recycle bin 113 displayed on the display unit 122. The selected file to be restored may be restored in a location where the file to be restored was stored before being deleted. The file managing unit 150 will be described in detail below.

As described above, the user may conveniently delete and/or restore the file stored in the image forming apparatus 100 via the user interface unit 120. Also, the user interface unit 120 displays the file list of the user recycle bin 113 only to users having authentication information corresponding to the user recycle bin 113. Accordingly, the security function of the image forming apparatus 100 may be reinforced.

Document boxes 111 and user recycle bins 113 respectively corresponding to a plurality of users that use the image forming apparatus 100 exist, and accordingly, a plurality of users that use the image forming apparatus 100 may search only the files that are stored and/or deleted by the users themselves. Accordingly, the security function of the image forming apparatus 100 may be reinforced.

Also, the display unit 122 displays the file list of the user recycle bin 113 corresponding to the common box, which is the document box 111 used commonly by a plurality of users, and the input unit 121 receives a selection signal that selects a file to be restored among the files listed in the displayed file list.

For example, when the user selects a common box, which is an example of the document box 111 that is commonly used by a plurality of users, via a display panel disposed in the image forming apparatus 100, and then selects the user recycle bin 113 corresponding to the selected common box, the user interface unit 120 displays the file list of the selected user recycle bin 113 on the display panel, or the like.

The user may select a file to be restored among the file list displayed via the display panel. The right determining unit 160 determines whether to restore the file, selected by the user, and the file managing unit 150 may restore the file to be restored, in the document box 111 where the file was stored before being deleted. The file managing unit 150 and the right determining unit 160 will be described in detail below.

As described above, an input signal may be obtained from the user, and output data may be displayed to the user by using the user interface unit 120. Examples of the input unit 121 include input devices such as a keyboard, a mouse, a touch pad, or a display panel of the image forming apparatus 100. Examples of the display unit 122 include, but are not limited to, a monitor displaying a graphic user interface (GUI) or a local user interface (LUI), a liquid crystal display (LCD), a display panel, or the like.

The communication interface unit 130 transmits and/or receives data via external devices and networks. Examples of the communication interface unit 130 include a modem used in faxing, a network module to connect to a network, and a USB host module to configure a data transfer channel to a portable storage medium, according to the function of the image forming apparatus 100.

Also, the image forming apparatus 100 may receive user authentication information, information about a file to be deleted, and/or information about a file to be restored, from the host apparatus 200, and provide a file list of the document box 111, a file list of the user recycle bin 113 to the user, or the like, via the communication interface unit 130.

The user authentication information is obtained such that when the host apparatus 200 and the image forming apparatus 100 are connected to each other, the user of the host apparatus 200 usually logs in by inputting an ID and a password, but when the image forming apparatus 100 and the host apparatus 200 are connected to each other, user authentication information may be automatically provided to the host apparatus 200. That is, according to the setup, the image forming apparatus 100 may obtain user authentication information without logging in.

Accordingly, the files stored in the image forming apparatus 100 may be conveniently managed by using the host apparatus 200.

The authentication information checking unit 141 checks user authentication information corresponding to login information received by the input unit 121. That is, the authentication information checking unit 141 checks whether user authentication information included in the login information received by the input unit 121 is consistent with information stored in the user account information 112.

The authentication information determining unit 142 may also determine whether a pre-generated user recycle bin 113 corresponding to authentication information checked by the authentication checking unit 141 exists. That is, the authentication information determining unit 142 determines whether the user recycle bin 113 corresponding to the checked authentication information exists among the plurality of user recycle bins 113 stored in the storage unit 110.

According to the determination of the authentication information determining unit 142, when the pre-generated user recycle bin 113 exists, the file managing unit 150 stores the file to be deleted in the pre-generated user recycle bin 113.

According to the determination of the authentication information determining unit 142, when the pre-generated user recycle bin 113 does not exist, a user recycle bin 113 is generated by the recycle bin generating unit 143, and the file to be deleted may be stored in the user recycle bin 113.

Also, the authentication information determining unit 142 deletes the user recycle bin 113 corresponding to the user authentication information. When the user of the image forming apparatus 100 disables the user recycle bin 113, the authentication information determining unit 142 deletes the user recycle bin 113 corresponding to the user authentication information.

Accordingly, the user may select whether to use the user recycle bin 113 according to such that user convenience of the image forming apparatus 100 may be improved.

The recycle bin generating unit 143 generates the user recycle bin 113 corresponding to the checked authentication information when the user recycle bin 113 does not exist according to the determination of the authentication information determining unit 142. Also, the recycle bin generating unit 143 generates the user recycle bin 113 corresponding to at least one user of the image forming apparatus 100. The display unit 122 may display one user recycle bin 113 corresponding to the authentication information obtained from the user among the generated user recycle bins 113.

According to the setup of the image forming apparatus 100, the user recycle bin 113 corresponding to the document box 111 may be provided as a basic setup, or the user recycle bin 113 may be generated according to the setup of the user.

Also, the recycle bin generating unit 143 may generate the user recycle bin 113 corresponding to the common box that is commonly used by the users of the image forming apparatus 100. That is, the recycle bin generating unit 143 may generate not only the user recycle bin 113 corresponding to the user authentication information, but also the user recycle bin 113 corresponding to the common box or the secure box which is an example of the document box 111.

The option setup unit 144 sets an option of the user recycle bin 113 generated by the recycle bin generating unit 143. The set option includes at least one of a storage period of the file to be deleted, a restoration option, and a storage capacity of the user recycle bin 113.

The storage period of the file to be deleted refers to a period in which the file to be deleted is stored in the user recycle bin 113. For example, the user recycle bin 113 stores files deleted by the user for a predetermined period of time. The user may modify the predetermined period in which the deleted files are stored in the user recycle bin 113. For example, if the predetermined period set as a basic setup is 15 days, the option setup unit 144 may modify the predetermined period to 30 days based on the information received from the user.

The restoration option refers to, for example, a location where a file to be restored is restored. That is, the option setup unit 144 may set whether the file to be restored is restored in the document box 111 where the file was stored before being deleted or in the document box 111 corresponding to the restoration location modified by the user based on the information received by the user.

The storage capacity of the user recycle bin 113 denotes a predetermined capacity of the user recycle bin 113 to store the deleted files. The option setup unit 144 may modify the capacity of the user recycle bin 113 in which the deleted files are stored based on the information received from the user. For example, if the basic setup capacity is 1 Mbyte, the user may modify the capacity to 2 Mbyte by using the option setup unit 144.

As described above, the user may set up an option of the user recycle bin 113 corresponding to the user authentication information, thereby providing user convenience of the user recycle bin 113 of the image forming apparatus 100.

The file managing unit 150 manages files stored in the image forming apparatus 100. The file managing unit 150 includes a deleting unit 151 and a restoring unit 152.

The deleting unit 151 deletes a file to be deleted, corresponding to a signal to select the file to be deleted, which is received via the input unit 121, from the document box 111 where the file to be deleted is stored, and stores the deleted file to be deleted in the user recycle bin 113 corresponding to the user authentication information received via the input unit 121.

The file to be deleted includes user authentication information and information about the document box 111 where the file to be deleted was stored before being deleted. Accordingly, as described above, the deleting unit 151 deletes the file to be deleted selected by the user among the file list of the document box 111 corresponding to the user authentication information, and stores the selected file to be deleted in the user recycle bin 113 corresponding to the user authentication information.

Also, the deleting unit 151 may completely delete the file to be deleted, which is stored in the user recycle bin 113, from the storage unit 110. Complete deleting denotes that data denoting the file to be deleted is physically deleted from the image forming apparatus 100.

More specifically, the input unit 121 receives a selection signal that selects the user recycle bin 113 displayed on the display unit 122, and a deletion signal to select a file to be deleted from the user recycle bin and completely deleted from the storage unit 110 among. In response to receiving the deletion signal, the deleting unit 151 completely deletes the file to be deleted, which was selected from the user recycle bin from the storage unit 110.

The restoring unit 152 restores a file to be restored, corresponding to the selection signal that is received via the input unit 121 among the file list of the user recycle bin 113 corresponding to the user authentication information, in the document box 111 where the file to be restored was been stored before being deleted. Restoration of the file to the document box 111 denotes that the file deleted from the document box 111 is stored in the document box 111 again.

For example, the input unit 121 obtains authentication information of a user A, and the display unit 122 displays a file list of the document box 111 corresponding to the user A. The user A selects a file to be deleted, among the displayed file list, and the deleting unit 151 deletes the file to be deleted from the document box 111 corresponding to the user A, and stores the file in the user recycle bin 113 corresponding to the user A.

Also, to restore the deleted file, the user A selects a file to be restored among the file list of the user recycle bin 113 corresponding to the user A provided via the display unit 122, and the restoring unit 152 restores the file to be restored in the document box 111 corresponding to the user A.

When a location for storing the file to be restored is modified by the user, the restoring unit 152 restores the file to be restored in the modified location. For example, the restoring unit 152 may restore the file to be restored in a new document box 111, instead of the document box where the file to be restored was stored before being deleted, according to a restoration option that is set by the option setup unit 144.

Accordingly, a file that is deleted by mistake by the user may be not deleted from the image forming apparatus 100, but may instead be stored in the user recycle bin 113 for a predetermined period of time, and may be restored to the document box 111 corresponding to the user.

Also, a plurality of user recycle bins 113 corresponds to a plurality of pieces of user authentication information. Thus, the deleted files may be classified according to users to improving the security function of the image forming apparatus 100.

The right determining unit 160 determines a right, i.e., authorization, of the file to be restored. More specifically, when a security setup exists in a selected file to be restored, the right determining unit 160 obtains authentication information from a user. Accordingly, the right determining unit 160 may determine whether to restore the file to be restored by determining whether the obtained user authentication information is consistent with security information set to the file to be restored.

The document box 111 corresponding to the user authentication information obtains authentication information from the user, and only a file list of the user recycle bin 113 corresponding to the obtained authentication information is provided to the user. Alternatively, a file list of the user recycle bin 113 corresponding to the common box or the secure box, which are examples of the document box 111 that is commonly used by a plurality of users, may be provided. When files stored in the common box or the secure box are deleted by the user, the file managing unit 150 stores the file to be deleted in the user recycle bin 113 corresponding to the common box or the secure box. When a file to be restored is selected among a file list of the user recycle bin 113 corresponding to the common box or the secure box by the user, the right determining unit 160 determines a right, i.e., authorization, regarding the file to be restored.

That is, when security information is set at a time point when the file to be restored is deleted, for example, when a code such as a password is set to the file to be restored, the right determining unit 160 obtains authentication information from the user who wants to restore the file. The authentication information may include security information such as a password set to the file to be restored.

The right determining unit 160 determines whether to restore the file to be restored according to whether the authentication information obtained from the user and the security information set to the file to be restored are consistent with each other. That is, when the authentication information obtained from the user and the security information set to the file to be restored are consistent, the right determining unit 160 determines that the file to be restored is restorable, and the restoring unit 152 restores the file to be restored in the common box or the secure box, which are an examples of the document box 111 that is commonly used by a plurality of users.

When the authentication information obtained from the user and the security information set to the file to be restored are not consistent, the right determining unit 160 determines that the file to be restored is not restorable, and reports to the user that the file to be restored cannot be restored.

Accordingly, security of a file may be set by using the security information set to the deleted files such that unauthenticated users cannot restore the deleted files after the file stored in the document box 111 that is commonly used by a plurality of users are deleted. Accordingly, this allows a user to set a security of the file stored in the common box or the secure box, which are examples of the document box 111 commonly used by a plurality of users.

The control unit 170 controls the overall functions of the image forming apparatus 100. Also, the control unit 170 controls elements of the image forming apparatus 100 to execute a method of managing file of the image forming apparatus 100. Accordingly, the control unit 170 controls the generated user recycle bin 113 generated by the recycle bin generating unit 143, and controls the user recycle bin 113 to be displayed on the displayed unit 122.

The image forming unit 181, the faxing unit 182, and the transmission function performing unit 183 perform various functions of the image forming apparatus 100. The image forming unit 181 performs printing of the files, the faxing unit 182 performs fax transmission of files, and the transmission function performing unit 183 transmits the files to external devices such as a server, a portable storage medium, a computer system, or the like.

Accordingly, the image forming apparatus 100 stores the files deleted by the user, in the user recycle bin 113 corresponding to user authentication information, thereby easily restoring the files while the security of the files is maintained by the user.

The host apparatus 200 may also control the image forming apparatus 100. The host apparatus 200 may include, but is not limited to, a general-use computer system a mobile system, and/or a personal digital assistant (PDA). The host apparatus 200 may further include a display to display information to a user.

Accordingly, the user may conveniently delete the files stored in the image forming apparatus 100 by using the host apparatus 200 and/or restore the files deleted from the image forming apparatus 100, as discussed in greater detail below.

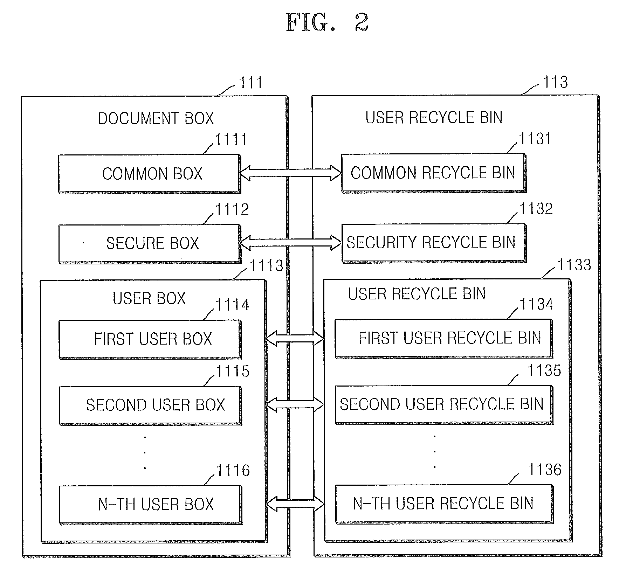

FIG. 2 is a detailed diagram of the document box 111 and the user recycle bin 113 of FIG. 1. Referring to FIG. 2, the document box 111 includes a common box 1111, a secure box 1112, and a user box 1113. The user box 1113 includes a first user box 1114, a second user box 1115, and an N-th user box 1116. Also, the user recycle bin 113 includes a common recycle bin 1131, a security recycle bin 1132, and a user recycle bin 1133. The user recycle bin 1133 includes a first user recycle bin 1134, a second user recycle bin 1135, and an N-th user recycle bin 1136.

As illustrated in FIG. 2, the user recycle bin 113 corresponding to the document box 111 exists, and in each document box 111, only the user recycle bin 113 corresponding to the document box 111 may be displayed.

For example, when the first user box 1114 corresponding to a first user is provided to the user interface unit 120 or the communication interface unit 130, the first user recycle bin 1134 corresponding to the first user box 1114 is provided to the first user.

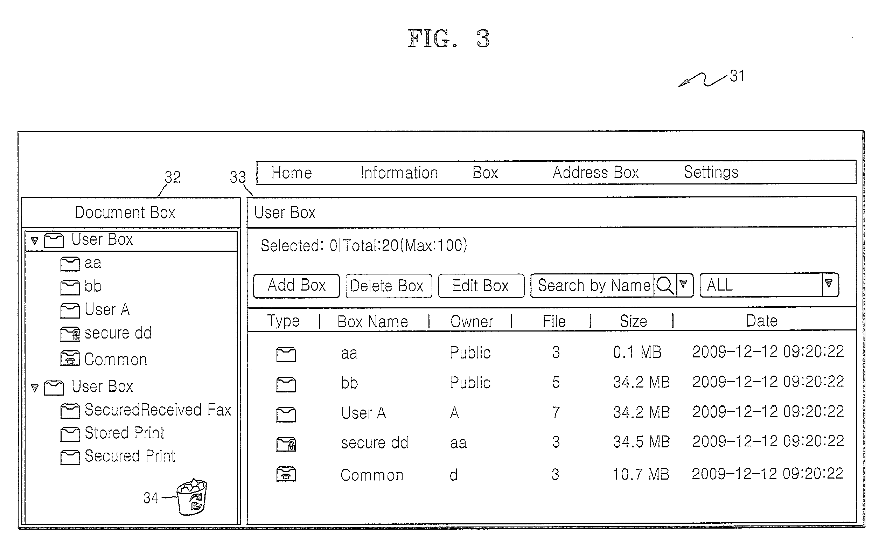

FIG. 3 illustrates a graphic user interface (GUI) displayed on an image forming apparatus 100 according to an embodiment of the present invention. Referring to FIG. 3, a GUI 31 is displayed on the display unit 122 of the image forming apparatus 100. In the GUI 31, the document box 32 and the user box 33 are displayed. In the document box 32, a list of the document boxes 111 including a common box, a secure box, a system box, a user box, or the like, corresponding to user authentication information is displayed. In the user box 33, the list of the document box 111 corresponding to user authentication information is displayed.

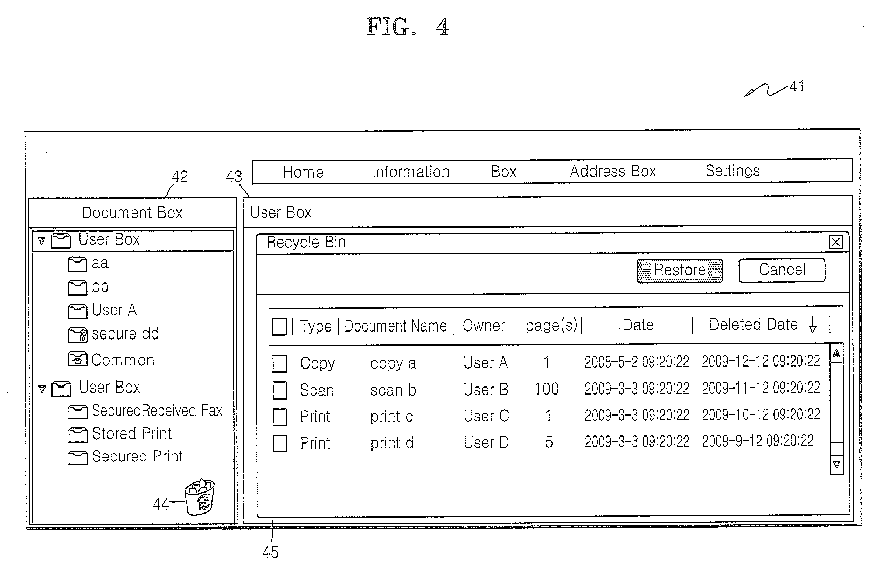

When the user selects one document box 111 displayed on the user box 33 via the input unit 121, a file list 45 of the selected document box 111 may be displayed on the display unit 122, as shown in Fig. 4. Also, an icon 34 denoting a user recycle bin is displayed on a lower end of the document box 32.

FIG. 4 illustrates a GUI displayed on the image forming apparatus 100 according to another embodiment of the present invention. Referring to FIG. 4, a GUI 41 that is displayed on the display unit 122 of the image forming apparatus 100 is illustrated. In GUI 41, the document box 42 and the user box 43 are displayed.

Also, an icon denoting a user recycle bin 44 is displayed on a lower end of the document box 42.

When the user selects the user recycle bin 44 via the input unit 121, the file list 45 of the selected user recycle bin 113 may be displayed on the display unit 122.

The file list 45 of the user recycle bin 44 may display various information such as a file format, a file name, a user, a page number, a file creation date, and a deletion date.

The user may select one or more files to be restored among the file list 45 of the user recycle bin 44. The file to be restored, selected by the user, may be restored in a storage space where the file to be restored previously existed, for example, in the document box 111 corresponding to user authentication information of the file to be restored.

Accordingly, the user may delete and/or restore the files stored in the image forming apparatus 100 by using a GUI displayed on the image forming apparatus 100, thereby easily managing the files.

As mentioned above, an alternative embodiment of the present general concept provides a host apparatus 200 that may communicate with the image forming apparatus 100. The host apparatus 200 includes, but is not limited to, a general-use computer system, a mobile system, and/or a personal digital assistant (PDA). The host apparatus 200 may further include a host display 202 to display information to a user.

Referring to Fig. 1, a user may input authentication information to the image forming apparatus 100 via the host apparatus 200. The authentication information checking unit 141 checks user authentication information corresponding to the login information. When the user authentication information corresponds with the login information, the image forming apparatus 100 may communicate with the host apparatus 200 such that the host display 202 may display a list of the document boxes 111 that is stored in the storage unit 110 of the image forming apparatus.

Further, the authentication information determining unit 142 may determine whether a user recycle bin 113 corresponding to the checked authentication information exists in the storage unit 110 of the image forming apparatus 100. If a user recycle bin 113 does not exist according to the authentication information determining unit 142, the recycle bin generating unit 143 generates a user recycle bin 113 corresponding to the checked authentication information. Accordingly, the host display 202 displays the generated user recycle bin 113. Additionally, the host display 202 may simultaneously display the list of the document boxes 111 corresponding to the user authentication information and the user recycle bin 113. After the host display 202 displays the user authentication information and/or the user recycle bin 113, the user may control the deletion and/or restoration of files, as discussed in detail above.

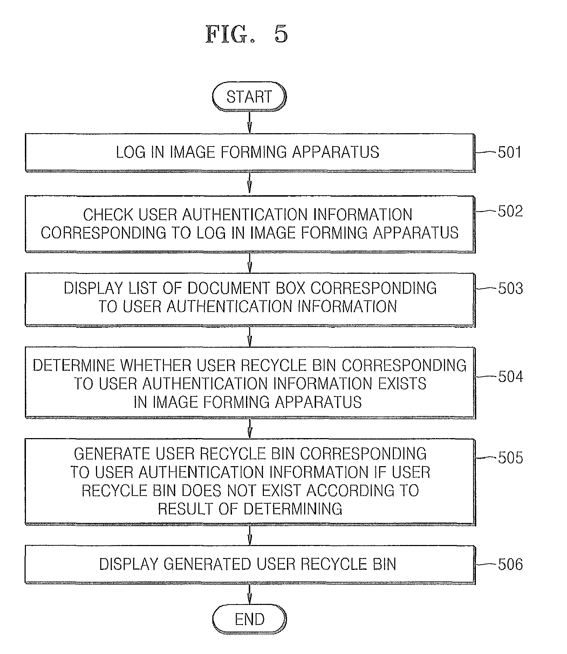

FIG. 5 is a flowchart illustrating an exemplary method of managing a file in the image forming apparatus 100 according to an exemplary embodiment of the present invention. Referring to FIG. 5, the method comprises operations that may be performed time-sequentially in the image forming system illustrated in FIG. 1. Accordingly, description omitted here but stated above with respect to the image forming system of FIG. 1, may also apply to the method described with reference to FIG. 5.

In operation 501, the input unit 121 receives login information from the user. The image forming apparatus 100 may obtain authentication information directly from the user via the input unit 121 and/or obtain authentication information from the host apparatus 200 via the communication interface unit 130.

In operation 502, the authentication information checking unit 141 checks user authentication information corresponding to the login information.

In operation 503, the display unit 122 displays a list of the document boxes 111 that is stored in the storage unit 110 and corresponds to the checked authentication information.

In operation 504, the authentication information determining unit 142 determines whether a user recycle bin 113 corresponding to the checked authentication information exists in the storage unit 110 of the image forming apparatus 100.

In operation 505, if a user recycle bin 113 does not exist according to the determining of the authentication information determining unit 142, the recycle bin generating unit 143 generates a user recycle bin 113 corresponding to the checked authentication information.

In operation 506, the display unit 122 displays the generated user recycle bin 113. The display unit 122 may simultaneously display the list of the document boxes 111 corresponding to the user authentication information and the user recycle bin 113.

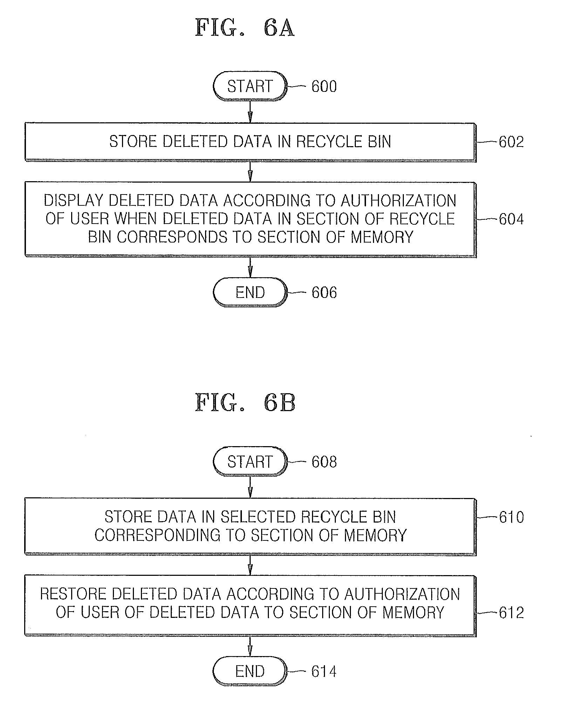

Each of FIGS 6A-6C illustrate an exemplary method of managing data of an image forming apparatus. Referring to FIG. 6A, the method begins at operation 600 and proceeds to operation 602 where data deleted from a first memory corresponding to the image forming apparatus is stored in a recycle bin. When the deleted data in a section of the recycle bin corresponds to a section of a memory, the deleted data according to an authorization of a user is displayed in operation 604.

Referring to FIG. 6B, the method begins at operation 608. In operation 610, data deleted from the image forming apparatus is stored in a selected recycle bin corresponding to a section of a memory. The method proceeds to operation 612 and the deleted data is restored according to an authorization of a user of the deleted data to a section of a memory.

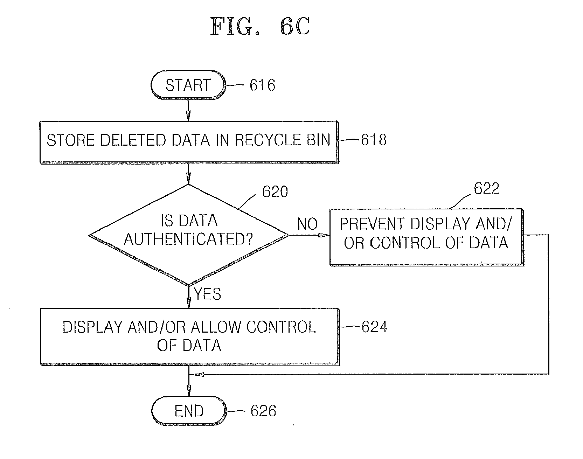

Now referring to FIG. 6C, the method begins at operation 616 and proceeds to operation 618 where data deleted from the image forming apparatus is stored in a recycle bin. Determination as to whether the stored data is authorized by a user of the image forming device is executed in operation 620. When the stored data is unauthorized by the user, display and control of the data is prevented in operation 622, and the method ends at operation 626. Otherwise, the method proceeds to operation 624 where the stored data is displayed and may be controlled by the user, and the method ends in operation 626.

Accordingly, in the image forming system as described above, the files deleted by the user using the user recycle bin 113 according to accounts of the plurality of users may be restored only by each corresponding user. Therefore, the security function of the image forming apparatus 100 may be improved. Also, options, such as security options of a user recycle bin, may be set by a corresponding user, thereby increasing the user's convenience.

According to the exemplary embodiments of the present invention, when files stored in the image forming apparatus 100 are deleted, the files are stored in a user recycle bin 113 for a predetermined period of time, and thus the user may conveniently restore the deleted files. Also, since user recycle bins are classified according to user accounts, the deleted files may be restored while maintaining the security.

The present invention can also be embodied as computer-readable codes on a computer-readable medium. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, DVDs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

While this present invention has been particularly shown and described with reference to exemplary embodiments thereof, it will be understood by those of ordinary skill in the art that various modifications in form and details may be made therein without departing from the scope of the present invention as defined by the appended claims. The exemplary embodiments should be considered in descriptive sense only and not for purposes of limitation. Therefore, the scope of the invention is defined not by the detailed description of the present invention but by the appended claims, and all differences within the scope will be construed as being included in the present invention.

## Claims

1. A method of managing at least one file stored in a document box in an image forming apparatus including a display unit and a document box corresponding to at least one user, the method comprising:
logging in the image forming apparatus using user authentication information;
checking the user authentication information used during the logging in the image forming apparatus;
displaying a list of the document box of the image forming apparatus and corresponding to the checked authentication information, on the display unit;
determining whether a pre-generated user recycle bin exists in the image forming apparatus that corresponds to the checked authentication information exists in the image forming apparatus;
generating a user recycle bin corresponding to the checked authentication information in response to determining the pre-generated user recycle bin does not exist; and
displaying the generated user recycle bin on the display unit,
wherein the user recycle bin is generated with respect to the at least one user.

2. The method of claim 1, further comprising:
selecting at least one file to be deleted, among the at least one file stored in the displayed document box; and
deleting the selected file to be deleted,
wherein the deleted file to be deleted is stored in the user recycle bin.

3. The method of claim 2, wherein the file to be deleted comprises the checked authentication information and information about a document box in which the file to be deleted has been stored before being deleted.

4. The method of claim 2, further comprising:
selecting the user recycle bin displayed on the display unit; selecting a file to be completely deleted from the image forming apparatus among the files to be deleted that are stored in the selected user recycle bin; and
completely deleting the selected file to be deleted, from the image forming apparatus.

5. The method of claim 1, further comprising:
selecting the user recycle bin displayed on the display unit;
selecting a file to be restored, among the files to be deleted stored in the selected user recycle bin; and
restoring the selected file to be restored in the document box where the file to be restored was stored before being deleted.

6. The method of claim 5, wherein the restoring the selected file to be restored further comprises:
selecting a modified location to restore the file to be restored; and
restoring the file to be restored in the modified location in response to selecting the modified location.

7. The method of claim 1, further comprising setting a control option of the generated user recycle bin,
wherein the control option comprises at least one of a storage period of the file to be deleted, a restoration option, and a storage capacity of the user recycle bin.

8. The method of claim 1, wherein the user recycle bin is generated in correspondence with a common box that is used by users of the image forming apparatus.

9. The method of claim 8, further comprising:
selecting a file to be restored among at least one file to be completely deleted, stored in the user recycle bin corresponding to the common box;
an authorization of the selected file to be restored; and
restoring the file to be restored according to the authorization.

10. The method of claim 9, wherein in the authorization further comprises:
determining whether a security setup is included the file to be restored;
receiving authentication information from a user restoring the file; and
determining whether to restore the file to be restored based on the received authentication information and the security information set to the file to be restored; and
restoring the file to be restored in the common box when the received authentication information is consistent with security information set to the file to be restored.

11. An image forming apparatus comprising a document box corresponding to at least one user, comprising:
an input unit to receive login information from the user;
an authentication information checking unit to check user authentication information corresponding to the received login information;
an authentication information determining unit to determine whether a pre-generated user recycle bin corresponding to the checked authentication information exists;
a recycle bin generating unit to generate a user recycle bin corresponding to the checked authentication information when the pre-generated user recycle bin does not exist;
a storage unit to store the document box and the generated user recycle bin;
a display unit to display at least one of a list of a document box corresponding to the checked authentication information and the generated user recycle bin; and
a control unit to control the generated user recycle bin displayed on the display unit,
wherein the recycle bin generating unit generates a user recycle bin corresponding to the at least one user, and the storage unit stores the generated recycle bin corresponding to the at least one user.

12. The image forming apparatus of claim 11, wherein the input unit receives a recycle signal that selects at least one file to be deleted, among the at least one file stored in the displayed document box, and the image forming apparatus further comprises:
a file managing unit that deletes a file to be deleted based on the recycle signal, from the document box where the file to be deleted is stored, and stores the deleted file to be deleted in the user recycle bin.

13. The image forming apparatus of claim 12, wherein the file to be deleted comprises the checked authentication information and information about a document box where the file to be deleted was stored before being deleted.

14. The image forming apparatus of claim 12, wherein the input unit receives a selection signal that selects the displayed user recycle bin, and a deletion signal that selects a file stored in the user recycle bin to be completely deleted from the user recycle bin in response to the deletion signal, wherein the file management unit further comprises:
a deleting unit to completely delete a file to be completely deleted, selected in correspondence with the received selection signal, from the storage unit.

15. The image forming apparatus of claim 12, wherein the input unit receives a selection signal that selects a user recycle bin displayed on the display unit and a file to be restored, among the at least one file to be deleted stored in the user recycle bin corresponding to the selection signal, and
the image forming apparatus further comprises a restoring unit to restore the file to be restored, corresponding to the selection signal, in a document box where the file to be restored was stored before being deleted.
